# EUROPÄISCHE PATENTSCHRIFT

(11) **EP 1 926 685 B1**
(45) Veröffentlichungstag und Bekanntmachung des Hinweises auf die Patenterteilung: **19.10.2011**
(21) Anmeldenummer: 06776870.5
(22) Anmeldetag: 16.08.2006
(51) Int. Cl.: C01F 7/02, C09C 1/40, C09C 3/04, C09C 3/12

(54) **VERFAHREN ZUR HERSTELLUNG VON MIT SILANEN OBERFLÄCHENMODIFIZIERTEM NANOKORUND**
METHOD FOR PRODUCING A SILANE MODIFIED SURFACE NANO-CORUNDUM
PROCEDE POUR REALISER UN CORINDON NANOMETRIQUE A SURFACE MODIFIEE PAR DES SILANES

(30) Priorität: 18.08.2005 DE 102005039435
(43) Veröffentlichungstag der Anmeldung: 04.06.2008
(73) Patentinhaber: Clariant Finance (BVI) Limited, Road Town, Tortola (VG)
(72) Erfinder: RÖSCH, Norbert, 86386 Gersthofen (DE)
(74) Vertreter: Paczkowski, Marcus
(86) Internationale Anmeldenummer: PCT/EP2006/008064
(87) Internationale Veröffentlichungsnummer: WO 2007/020061

(56) Entgegenhaltungen:
- WO-A-03/033405
- WO-A-03/055939
- DE-A1- 19 922 492

## Beschreibung

Die vorliegende Erfindung betrifft die Herstellung von Nanokorund (α-AlO₃) der mit Silanen oberflächenmodifiziert ist.

Feine Aluminiumoxidpulver werden insbesondere für keramische Anwendungen, zur Matrixverstärkung organischer oder metallischer Schichten, als Füllstoffe, Polierpulver, für die Herstellung von Schleifmittel, als Additive in Lacken und Laminaten sowie für weitere Spezialanwendungen eingesetzt. Für den Einsatz in Laminaten werden die Aluminiumoxidpulver häufig noch mit Silanen oberflächenmodifiziert, um eine bessere Adaption an die Harzschichten zu erreichen. Es wird dabei sowohl die Haftung, als auch die optische Eigenschaft verbessert. Dies äußert sich dann in einer Abnahme der Trübung. Bekannt ist auch ein mit Silan modifiziertes pyrogenes Aluminiumoxid für den Einsatz in Tonern (DE 42 02 694).

Nanopartikel aus Al₂O₃, deren Oberfläche mit Silanen modifiziert ist, sind in WO 02/051376 beschrieben. Bei deren Herstellung geht man von einem handelsüblichen Al₂O₃ aus, das dann mit einem Silan behandelt wird. Herstellung der Nanopartikel und deren Modifizierung erfolgen somit in zwei separaten Schritten. Handelsüblicher Nanokorund (α-Al₂O₃) liegt als Pulver vor. Bedingt durch die hohe Oberflächenenergie lagern sich jedoch Nanopartikel immer zu größeren Agglomeraten zusammen, so dass es sich in Wirklichkeit nicht um echte Nanopartikel handelt. Dementsprechend groß sind auch die mit Silanen beschichteten Partikel gemäß WO 02/051 376.

WO 03/055939 beschreibt ein Verfahren zur Herstellung von organisch-anorganischen Nanoverbundstoffen wobei anorganische Partikel in Gegenwart einer organischen Lösungsmittels durch Behandlung mit Ultraschall desagglomeriert werden und anschließend mit einem Organosilan, Organotitanat oder Organozirkonat oberflächen modifiziert werden.
WO 03/033405 offenbart ein Verfahren zur Herstellung von gemahlenem Aluminiumoxid welches organofunktionall modifiziertes Silan enthält. Dabei wird das Aluminiumoxid gemahlen und gleichzeitig oder anschließend mit einem Silan behandelt

Es wurde nun gefunden, dass sich mit Silanen modifizierte α-Al₂O₃-Nanopartikel mit sehr kleiner Teilchengröße herstellen lassen, wenn man grobere Agglomerate von α-Al₂O₃ in Gegenwart eines organischen Lösungsmittels unter Zugabe eines Silans desagglomeriert.

Gegenstand der Erfindung ist somit ein Verfahren zur Herstellung von mit Silanen modifizierter Nanokorund, welches darin besteht, dass man Agglomerate von Nanokorund in Gegenwart eines organischen Lösungsmittels und eines Silans durch Mahlen desagglomeriert und gleichzeitig oder anschlieβend mit einem Silan behandelt.

Bei dem erfindungsgemäßen Verfahren geht man aus von größeren Agglomeraten, die aus Kristalliten von Nanokorund bestehen, wobei unter dem Begriff Nanokorund im allgemeinen Partikel mit einer mittleren Teilchengröße von 1 bis 200 nm, vorzugsweise von 1 bis 100 nm, verstanden werden. Diese Agglomerate sind an sich bekannt und können beispielsweise hergestellt werden durch nachfolgend beschriebene Verfahren:

Bei chemischen Synthesen handelt es sich meist um Fällungsreaktionen, (Hydroxidfällung, Hydrolyse metallorganischer Verbindungen) mit anschließender Kalzinierung. Dabei werden häufig Kristallisationskeime zugesetzt um die Umwandlungstemperatur zum α-Aluminiumoxid herabzusetzen. Die so erhaltenen Sole werden getrocknet und dabei in ein Gel überführt. Die weitere Kalzinierung findet dann bei Temperaturen zwischen 350°C und 650°C statt. Für die Umwandlung zum α-Al₂O₃ muss dann bei Temperaturen um 1000°C geglüht werden. Die Verfahren sind ausführlich in DE 199 22 492 beschrieben.

Ein weiterer Weg nano-Materialien zu erhalten ist das Aerosolverfahren. Dabei werden die gewünschten Moleküle aus chemischen Reaktionen eines Precursorgases oder durch schnelle Abkühlung eines übersättigten Gases erhalten. Die Bildung der Partikel erfolgt entweder durch Kollision oder die ständige im Gleichgewicht befindliche Verdampfung und Kondensation von Molekülclustem. Die neu gebildeten Teilchen wachsen durch weitere Kollision mit Produktmolekülen (Kondensation) und/oder Partikeln (Koagulation). Ist die Koagulationsrate größer als jene der Neubildung bzw. des Wachstums, entstehen Agglomerate von kugelförmigen Primärpartikeln.

Flammenreaktoren stellen eine auf diesem Prinzip basierende Herstellungsvariante dar. Nanopartikel werden hier durch die Zersetzung von

Precursormolekülen in der Flamme bei 1500°C - 2500°C gebildet. Als Beispiele seien die Oxidationen von TiCl₄; SiCl₄ und Si₂O(CH₃)₆ in Methan/O₂-Flammen erwähnt, die zu TiO₂ und SiO₂ Partikeln führen. Bei Einsatz von AlCl3 konnte bislang nur die entsprechende Tonerde erzeugt werden. Flammenreaktoren werden heute großtechnisch für die Synthese von Submikropartikeln wie Ruß, Pigment-TiO₂, Kieselsäure und Tonerde eingesetzt.

Kleine Partikel können auch mit Hilfe von Fliehkraft, Druckluft, Schall, Ultraschall und weiteren Methoden auch aus Tropfen gebildet werden. Die Tropfen werden dann durch direkte Pyrolyse oder durch in situ Reaktionen mit anderen Gasen in Pulver umgewandelt. Als bekannte Verfahren sind die Sprüh-und Gefriertrocknung zu erwähnen. Bei der Spraypyrolyse werden Precursortropfen durch ein Hochtemperaturfeld (Flamme, Ofen) transportiert, was zu einer raschen Verdampfung der leicht flüchtigen Komponente führt oder die Zersetzungsreaktion zum gewünschten Produkt initiiert. Die gewünschten Partikel werden in Filtern gesammelt. Als Beispiel kann hier die Herstellung von BaTiO₃ aus einer wässrigen Lösung von Bariumacetat und Titanlactat genannt werden.

Durch Mahlung kann ebenfalls versucht werden, Korund zu Zerkleinern und dabei Kristallite im nano-Bereich zu erzeugen. Die besten Mahlergebnisse können mit Rührwerkskugelmühlen in einer Nassmahlung erzielt werden. Dabei müssen Mahlperlen aus einem Material verwendet werden, das eine größere Härte als Korund hat.

Ein weiterer Weg zur Herstellung von Korund bei niedriger Temperatur stellt die Umwandlung von Aluminiumchlorohydrat dar. Dieses wird dazu ebenfalls mit Impfkeimen bevorzugt aus Feinstkorund oder Hämatit versetzt. Zur Vermeidung von Kristallwachstum müssen die Proben bei Temperaturen um 700°C bis maximal 900°C kalziniert werden. Die Dauer der Kalzinierung beträgt hierbei mindestens vier Stunden. Nachteil dieser Methode ist deshalb der große Zeitaufwand und die Restmengen an Chlor im Aluminiumoxid. Die Methode wurde ausführlich beschrieben in Ber. DKG 74 (1997) No. 11/12, S.719-722.

Aus diesen Agglomeraten müssen die Nanopartikel freigesetz werden. Dies geschieht durch Mahlen in gegenwart eines organischen Lösungsmittels. Erfindungsgemäß erfolgt diese Desagglomeration in Gegenwart eines organischen Lösungsmittels und eines Silans, das während des Mahlprozesses, die entstehenden aktiven und reaktiven Oberflächen durch eine chemische Reaktion oder physikalische Anlagerung absättigt und somit die Reagglomeration verhindert. Der nano-Korund bleibt als kleines Partikel erhalten.

Vorzugsweise geht man bei dem erfindungsgemäßen Verfahren von Agglomeraten aus, die entsprechend den Angaben in Ber. DKG 74 (1997) No. 11/12, S. 719-722 hergestellt werden.

Ausgangspunkt hierbei ist Aluminiumchlorohydrat, dem die Formel Al₂(OH)ₓCl_{y} zukommt, wobei x eine Zahl von 2,5 bis 5,5 und y eine Zahl von 3,5 und 0,5 ist und die Summe von x und y stets 6 beträgt. Dieses Aluminiumchlorohydrat wird als wässrige Lösung mit Kristallisationskeimen vermischt, anschließend getrocknet und dann einer thermischen Behandlung (Kalzinierung) unterzogen.

Bevorzugt geht man dabei von 50 %igen wässrigen Lösungen aus, wie sie kommerziell verfügbar sind. Eine solche Lösung wird mit Kristallisationskeimen versetzt, die die Bildung der α-Modifikation des Al₂O₃ fördern. Insbesondere bewirken solche Keine eine Herabsetzung der Temperatur für die Bildung der α-Modifikation bei der nachfolgenden thermischen Behandlung. Als Keime kommen in Frage feinstdisperser Korund, Diaspor oder Hämatit. Bevorzugt nimmt man feinstdisperse α-Al₂O₃-Keime mit einer mittleren Teilchengröße von weniger als 0,1 µm. Im Allgemeinen reichen 2 bis 3 Gew.-% an Keimen bezogen auf das entstehende Aluminiumoxid aus.

Diese Ausgangslösung kann zusätzlich noch Oxidbildner enthalten. Hierfür kommen vor allem in Frage Chloride, Oxychloride und/oder Hydrochloride der Elemente der II. bis V. Hauptgruppe sowie der Nebengruppen, insbesondere die Chloride, Oxychloride und/oder Hydrochloride der Elemente Ca, Mg, Y, Ti, Zr, Cr, Fe, Co und Si.

Diese Suspension aus Aluminiumchlorohydrat, Keimen und gegebenenfalls Oxidbildnern wird dann bis zum Trocknen eingedampft und einer thermischen Behandlung (Kalzinierung) unterworfen. Diese Kalzinierung erfolgt in hierfür geeigneten Vorrichtungen, beispielsweise in Durchschub-, Kammer-, Rohr-, Drehrohr- oder Mikrowellenöfen oder in einem Wirbelschichtreaktor. Gemäß einer Variante des erfindungsgemäßen Verfahrens kann man auch so vorgehen, dass man die wässrige Suspension aus Aluminiumchlorohydrat und Keimen ohne vorherige Entfernung des Wassers direkt in die Kalzinierungsapparatur einspritzt.

Die Temperatur für die Kalzinierung soll 1100°C nicht übersteigen. Die untere Temperaturgrenze ist abhängig von der gewünschten Ausbeute an nanokristallinem Korund, von gewünschten Restchlorgehalt und dem Gehalt an Keimen. Die Korundbildung setzt bereits bei ca. 500°C ein, um jedoch den Chlorgehalt niedrig und die Ausbeute an nanokristallinem Korund hoch zu halten, wird man jedoch bevorzugt bei 700 bis 1100°C, insbesondere bei 1000 bis 1100°C arbeiten.

Es hat sich herausgestellt, dass für die Kalzinierung im Allgemeinen weniger als 30 Minuten, vorzugsweise 0,5 bis 10, insbesondere 0,5 bis 5 Minuten ausreichen. Bereits nach dieser kurzen Zeit kann unter den oben angegebenen Bedingungen für die bevorzugten Temperaturen eine ausreichende Ausbeute an nanokristallinem Korund erreicht werden. Man kann jedoch auch entsprechend den Angaben in Ber. DKG 74 (1997) No. 11/12, S. 722 4 Stunden lang bei 700°C oder 8 Stunden lang bei 500°C calcinieren.

Bei der Kalzinierung fallen Agglomerate von nanokristallinem Korund in Form von nahezu kugelförmigen Nanopartikeln an. Zur Gewinnung dieser Nanopartikel werden die Agglomerate durch Nassmahlung in einem organischen Lösungsmittel zerkleinert, beispielsweise in einer Attritormühle oder Rührwerksmühle. So erhält man beispielsweise nach einer zweistündigen Mahlung eine Suspension von nanokristallinem Korund mit einem d50-Wert von kleiner als 100 nm.

Für die erfindungsgemäße Modifizierung dieser Nanopartikel mit Silanen gibt es zwei Möglichkeiten. Gemäß der ersten Variante kann man die Desagglomeration in Gegenwart des Silans vornehmen, beispielsweise indem man das Silan während des Mahlens in die Mühle gibt. Eine zweite Möglichkeit besteht darin, dass man zuerst die Agglomerate des Nanokorunds zerstört und anschließend die Nanopartikel, vorzugsweise in Form einer Suspension in einem organischen Lösungsmittel, mit dem Silan behandelt.

Als geeignete Silane kommen hierbei vorzugsweise die folgenden Typen in Frage: Als Silane kommen in Frage Verbindungen der Formeln

R [-Si (R'R")-O-]ₙSi(R'R")-R"' oder cyclo-[-Si(R'R")-O-]ᵣSi(R'R")-O- a)

worin
R, R', R", R"'- gleich oder verschieden voneinander einen Alkylrest mit 1 - 18 C-Atomen oder einen Phenylrest oder einen Alkylphenyl- oder einen Phenylalkylrest mit 6 - 18 C-Atomen oder einen Rest der allgemeinen Formel -(CₘH₂ₘ-O)ₚ-C_{q}H_{2q+1} oder einen Rest der allgemeinen Formel -CₛH₂ₛY oder einen Rest der allgemeinen Formel -XZₜ₋₁,
- n: eine ganze Zahl mit der Bedeutung 1 ≤ n ≤ 1000, bevorzugt 1 ≤ n ≤ 100,
- m: eine ganze Zahl 0 ≤ m ≤ 12 und
- p: eine ganze Zahl 0 ≤ p ≤ 60 und
- q: eine ganze Zahl 0 ≤ q ≤ 40 und
- r: eine ganze Zahl 2 ≤ r ≤ 10 und
- s: eine ganze Zahl 0 ≤ s ≤ 18 und
Y eine reaktive Gruppe, beispielsweise α,β-ethylenisch ungesättigte Gruppen, wie (Meth)Acryloyl-, Vinyl- oder Allylgruppen, Amino-, Amido-, Ureido-, Hydroxyl-, Epoxy-, Isocyanato-, Mercapto-, Sulfonyl-, Phosphonyl-, Trialkoxysilyl-, Alkyldialkoxysilyl-, Dialkylmonoalkoxysilyl-, Anhydridund/oder Carboxylgruppen, Imido-, Imino-, Sulfit-, Sulfat-, Sulfonat-, Phosphin-, Phosphit-, Phosphat-, Phosphonatgruppen und
- X: ein t-funktionelles Oligomer mit
- t: eine ganze Zahl 2 ≤ t ≤ 8 und
- Z: wiederum einen Rest 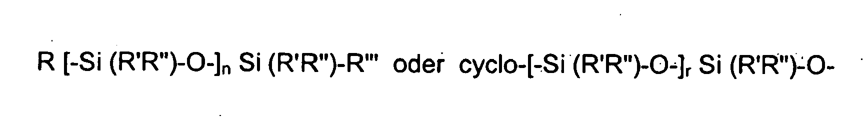
darstellt, wie vorstehend definiert.

Das t-funktionelle Oligomer X ist dabei bevorzugt ausgewählt aus:
Oligoether, Oligoester, Oligoamid, Oligourethan, Oligoharnstoff, Oligoolefin,
Oligovinylhalogenid, Oligovinylidendihalogenid, Oligoimin, Oligovinylalkohol, Ester,
Acetal oder Ether von Oligovinylalkohol, Cooligomere von Maleinsäureanhydrid,
Oligomere von (Meth)acrylsäure, Oligomere von (Meth)acrylsäureestern,
Oligomere von (Meth)acrylsäureamiden, Oligomere von (Meth)acrylsäureimiden,
Oligomere von (Meth)acrylsäurenitril, besonders bevorzugt Oligoether, Oligoester,
Oligourethane.

Beispiele für Reste von Oligoethern sind Verbindungen vom Typ -(CₐH₂ₐ-O)_{b}-CₐH₂a- bzw. O-(CₐH₂ₐ-O)_{b}-CₐH₂ₐ-O mit 2 ≤ a ≤ 12 und 1 ≤ b ≤ 60, z.B. ein Diethylenglykol-, Triethylenglykol- oder Tetraethylenglykol-Rest, ein Dipropylenglykol-, Tripropylenglykol-, Tetrapropylenglykol-Rest, ein Dibutylenglykol-, Tributylenglykol- oder Tetrabutylenglykol-Rest. Beispiele für Reste von Oligoestern sind Verbindungen vom Typ -C_{b}H_{2b}-(O(CO) CₐH₂ₐ-(CO) O-C_{b}H_{2b}-)_{c}- bzw. -O-C_{b}H_{2b}-(O(CO) CaH2a-(CO) O-C_{b}H_{2b}-)_{c}CO- mit a und b unterschiedlich oder gleich 3 ≤ a ≤ 12, 3 ≤ b ≤ 12 und 1 ≤ c ≤ 30, z.B. ein Oligoester aus Hexandiol und Adipinsäure.
b) Organosilane des Typs (RO)₃Si(CH₂)ₘ-R'
R = Alkyl, wie Methyl-, Ethyl-, Propylm = 0,1 - 20
R' = Methyl-, Phenyl,
- C₄F₉; OCF₂-CHF-CF₃, -C₆F₁₃, -O-CF₂-CHF₂
- NH₂, -N₃, -SCN, -CH=CH₂, -NH-CH₂-CH₂-NH₂,
- N-(CH₂-CH₂-NH₂)₂
- OOC(CH₃)C = CH2
- OCH₂-CH(O)CH₂
- NH-CO-N-CO-(CH₂)₅
- NH-COO-CH₃, -NH-COO-CH₂-CH₃, -NH-(CH₂)₃Si(OR)₃
- Sₓ-(CH₂)₃)Si(OR)₃
- SH
- NR'R"R"' (R' = Alkyl, Phenyl; R" = Alkyl, Phenyl; R"' = H, Alkyl, Phenyl, Benzyl,
   C₂H₄NR""R""' mit R"" = A, Alkyl und R""' = H, Alkyl).

Beispiele für Silane der oben definierten Art sind z.B. Hexamethyldisiloxan, Octamethyltrisiloxan, weitere homologe und isomere Verbindungen der Reihe SiₙOₙ₋₁(CH₃)₂ₙ₊₂, wobei
n eine ganze Zahl 2 ≤ n ≤ 1000 ist, z.B. Polydimethylsiloxan 200® fluid
(20 cSt).
Hexamethyl-cyclo-trisiloxan, Octamethyl-cyclo-tetrasiloxan, weitere homologe und isomere Verbindungen der Reihe
(Si-O)ᵣ(CH₃)₂ᵣ, wobei
r eine ganze Zahl 3 ≤ r ≤ 12 ist,

Dihydroxytetramethydisiloxan, Dihydroxyhexamethyltrisiloxan, Dihydroxyoctamethyltetrasiloxan, weitere homologe und isomere Verbindungen der Reihe
HO-[(Si-O)ₙ(CH₃)₂ₙ]-Si(CH₃)₂-OH, oder
HO-[(Si-O)ₙ(CH₃)₂ₙ]-[Si-O)ₘ(C₆H₅)₂ₘ]-Si(CH₃)₂-OH, wobei
m eine ganze Zahl 2 ≤ m ≤ 1000 ist,
bevorzugt sind die α,ω-Dihydroxypolysiloxane, z.B. Polydimethylsiloxan (OH-Endgruppen, 90-150 cST) oder Polydimethylsiloxan-co-diphenylsiloxan, (Dihydroxy-Endgruppen, 60 cST).

Dihydrohexamethytrisiloxan, Dihydrooctamethyltetrasiloxan weitere homologe und isomere Verbindungen der Reihe
H-[(Si-O)ₙ(CH₃]₂ₙ]-Si(CH₃)₂-H wobei,
n eine ganze Zahl 2 ≤ n ≤ 1000 ist, bevorzugt sind die α,ω-Dihydropolysiloxane, z.B. Polydimethylsiloxan (Hydrid-Endgruppen, Mₙ = 580). Di(hydroxypropyl)hexamethyltrisiloxan, Dihydroxypropyl)octamethyltetrasiloxan weitere homologe und isomere Verbindungen der Reihe
HO-(CH₂)ᵤ[(Si-O)n(CH₃)₂ₙ]-Si(CH₃)₂(CH₂)ᵤ-OH bevorzugt sind die α,ω-Dicarbinolpolysiloxane mit 3 ≤ u ≤ 18, 3 ≤ n ≤ 1000 oder ihre Polyethermodifizierten Nachfolgeverbindungen auf Basis der Ethylenoxid (EO) und Propylenoxid (PO) als Homo- oder Mischpolymer HO-(EO/PO)ᵥ-(CH₂)ᵤ[(Si-O)ₜ(CH₃)₂ₜ]-Si(CH₃)₂(CH₂)ᵤ-(EO/PO)ᵥ-OH bevorzugt sind α,ω-Di(carbinolpolyether)-polysiloxane mit 3 ≤ n ≤ 1000, 3 ≤ u ≤ 18, 1 ≤ v ≤ 50.

Statt α,ω-OH-Gruppen kommen ebenfalls die entsprechenden difunktionellen Verbindungen mit Epoxy-, Isocyanato-, Vinyl-, Allyl- und Di(meth)acryloylgruppen zum Einsatz, z.B. Polydimethylsiloxan mit Vinylendgruppen (850-1150 cST) oder TEGORAD 2500 der Fa. Tego Chemie Service.

Es kommen auch die Veresterungsprodukte von ethoxylierten/propoxylierten Trisiloxanen und höheren Siloxanen mit Acrylsäurecopolymeren und/oder Maleinsäurecopolymeren als modifizierende Verbindung in Frage, z.B. BYK Silclean 3700 der Fa. Byk Chemie oder TEGO® Protect 5001 der Fa. Tego Chemie Service GmbH.

Statt α,ω-OH-Gruppen kommen ebenfalls die entsprechenden difunktionellen Verbindungen mit -NHR"" mit R"" = H oder Alkyl zum Einsatz, z.B. die allgemein bekannten Aminosiliconöle der Firmen Wacker, Dow Corning, Bayer, Rhodia etc. zum Einsatz, die statistisch auf der Polysiloxankette verteilte (Cyclo)-Alkylaminogruppen oder (Cyclo)-Alkyliminogruppen auf ihrer Polymerkette tragen.

Organosilane des Typs (RO)₃Si(CₙH₂ₙ₊₁) und (RO)₃Si(CₙH₂ₙ₊₁), wobei R ein Alkyl, wie z.B. Methyl-, Ethyl-, n-Propyl-, i-Propyl-, Butyl-, n 1 bis 20.

Organosilane des Typs R'ₓ(RO)_{y}Si(CₙH₂ₙ₊₁) und (RO)₃Si(CₙH₂ₙ₊₁), wobei
R ein Alkyl, wie z.B. Methyl-, Ethyl-, n-Propyl-, i-Propyl-, Butyl-,
R' ein Alkyl, wie z.B. Methyl-, Ethyl-, n-Propyl-, i-Propyl, Butyl-,
R' ein Cycloalkyl
n eine ganze Zahl von 1 - 20
x+y 3
x 1 oder 2
y 1 oder 2

Organosilane des Typs (RO)₃Si(CH₂)ₘ-R', wobei
R ein Alkyl, wie z.B. Methyl-, Ethyl-, Propyl-,
m eine Zahl zwischen 0,1 - 20
R' Methyl-, Phenyl, -C₄F₉; OCF₂-CHF-CF₃, -C₆F₁₃, -O-CF₂-CHF₂, -NH₂, -N₃,
- SCN, -CH=CH₂, -NH-CH₂-CH₂-NH₂, -N-(CH₂-CH₂-NH₂)₂,
- OOC(CH₃)C = CH₂,
- OCH₂-CH(O)CH₂, -NH-CO-N-CO-(CH₂)₅, -NH-COO-CH₃, -NH-COO-CH₂-CH₃, -NH-(CH₂)₃Si(OR)₃, -Sₓ-(CH₂)₃)Si(OR)₃, -SH-NR'R"R"' (R' = Alkyl, Phenyl; R" = Alkyl, Phenyl; R"' = H, Alkyl, Phenyl, Benzyl, C₂H₄NR""R""' mit R"" = A, Alkyl und R""' = H, Alkyl) bedeutet.

Bevorzugte Silane sind die im Folgenden aufgeführten Silane: Triethoxysilan, Octadecyltimethoxisilan, 3-(Trimethoxysilyl)-propylmethacrylate, 3-(Trimethoxysilyl)-propylacrylate, 3-(Trimethoxysilyl)-methylmethacrylate, 3-(Trimethoxysilyl)-methylacrylate, 3-(Trimethoxysilyl)-ethylmethacrylate, 3-(Trimethoxysilyl)-ethylacrylate, 3-(Trimethoxysilyl)pentylmethacrylate, 3-(Trimethoxysilyl)-pentylacrylate, 3-(Trimethoxysilyl)-hexylmethacrylate, 3-(Trimethoxysilyl)-hexylacrylate, 3-(Trimethoxysilyl)-butylmethacrylate, 3-(Trimethoxysilyl)-butyllacrylate, 3-(Trimethoxysilyl)-heptylmethacrylate, 3-(Trimethoxysilyl)-heptylacrylate, 3-(Trimethoxysilyl)-octylmethacrylate, 3-(Trimethoxysilyl)-octylacrylate, Methyltrimethoxysilane, Methyltriethoxysilane, Propyltrimethoxisilane, Propyltriethoxisilane, Isobutyltrimethoxisilane, Isobutyltriethoxysilane, Octyltrimetoxysilane, Octyltriethoxysilane, Hexadecyltrimethoxysilan, Phenyltrimethoxysilane, Phenyltriehoxysilane, Tridecafluoro-1,1,2,2-tetrahydrooctyltriethoxysilane, Tetramethoxysilane, Teraethoxysilan, Oligomeric tetraethoxysilane (DYNASIL^{®} 40 Fa. Degussa), Tetra-n-propoxysilane, 3-Glycidyloxypopyltrimethoxysilan, 3-Glycidyloxypropyltriethoxysilane, 3-Methacryloxylpropyltrimethoxysilane, Vinyltrimethoxysilane, Vinyltriethoxysilane, 3-Mercaptopropyltrimethoxysilane, 3-Aminopropyltriethoxysilane, 3-Aminopropyltrimethoxysilane, 2-Aminoethyl-3-aminopropyltrimethoxysilane, Triaminofunctional propyltrimethoxysilane (DYNASYLAN^{®} TRIAMINO Fa. Degussa), N-(n-Butyl)-3-aminopropyltrimethoxysilane, 3-Aminopropylmethyldiethoxysilane.

Diese Silane werden vorzugsweise in molaren Verhältnissen Korund zu Silan von 1:1 bis 10:1 zugegeben. Die Menge an organischem Lösungsmittel beim Desagglomerieren beträgt im Allgemeinen 80 bis 90 Gew.-%, bezogen auf die Gesamtmenge an Korund und Lösungsmittel. Als Lösungsmittel können prinzipiell alle organischen Lösemittel verwendet werden. Bevorzugt kommen C₁-C₄-Alkohole, insbesondere Methanol, Ethanol oder Isopropanol, in Frage sowie Aceton oder Tetrahydrofuran.

Die Desagglomerierung durch Mahlen und gleichzeitige Modifizierung mit dem Silan erfolgt vorzugsweise bei Temperaturen von 20 bis 150°C, besonders bevorzugt bei 20 bis 90°C.

Da die Desagglomeration durch Mahlen erfolgt, so wird die Suspension anschließend von den Mahlperlen abgetrennt.

Nach der Desagglomeration kann die Suspension zur Vervollständigung der Reaktion noch bis zu 30 Stunden erhitzt werden. Abschließend wird das Lösungsmittel abdestilliert und der verbleibende Rückstand getrocknet.

Es ist auch möglich den Korund in den entsprechenden Lösungsmitteln zu suspendieren und die Reaktion mit dem Silan nach der Desagglomeration in einem weiteren Schritt durchzuführen.

Der so hergestellte, mit Silan modifizierte Nanokorund kann in transparente Oberflächenlackierungen oder -beschichtungen eingearbeitet werden, wodurch man einen verbesserten Kratzschutz erreicht. Durch die Modifizierung mit den Silanen bleiben die Schichten mit Nanokorund klar und zeigen keine Trübung.

### Beispiele:

### Beispiel 1:

150 g Korundpulver mit einer Körnung im Bereich 10 - 50 µm, bestehend aus Kristalliten < 100 nm, wurden in 110 g Isopropanol suspendiert. Der Suspension wurden 40 g Trimethoxy-octylsilan zugegeben und einer vertikalen Rührwerkskugelmühle der Fa. Netzsch (Typ PE 075) zugeführt. Die eingesetzten Mahlperlen bestanden aus Zirkoniumoxid (stabilisiert mit Yttrium) und wiesen eine Größe von 0,3 - 0,5 mm auf. Nach drei Stunden wurde die Suspension von den Mahlperlen abgetrennt und unter Rückfluss für weitere 4 h gekocht. Anschließend wurde das Lösungsmittel abdestilliert und der zurückbleibende feuchte Rückstand im Trockenschrank bei 110°C weitere 20 h getrocknet.

Die Bilder der durchgeführten REM-Aufnahme (Rasterelektronenmikroskop) zeigten das Vorhandensein von Kristalliten im Bereich 10 - 100 nm.

### Beispiel 2:

50 g Korundpulver mit einer Körnung im Bereich 10 - 50 µm, bestehend aus Kristalliten < 100 nm, wurden in 180 g Isopropanol suspendiert. Der Suspension wurden 20 g Trimethoxy-octadecylsilan zugegeben und diese einer vertikalen Rührwerkskugelmühle der Fa. Netzsch (Typ PE 075) zugeführt. Die eingesetzten Mahlperlen bestanden aus Zirkoniumoxid (stabilisiert mit Yttrium) und wiesen eine Größe von 0,3 - 0,5 mm auf. Nach drei Stunden wurde die Suspension von den Mahlperlen abgetrennt und unter Rückfluss für weitere 4 h gekocht. Anschließend wurde das Lösungsmittel abdestilliert und der zurückbleibende feuchte Rückstand im Trockenschrank bei 110°C weitere 20 h getrocknet.

### Beispiel 3:

40 g Korundpulver mit einer Körnung im Bereich 10 - 50 µm, bestehend aus Kristalliten < 100 nm, wurden in 160 g Methanol suspendiert. Der Suspension wurden 10 g 3-(Trimethoxysilyl)-propyl-methacrylat zugegeben und diese einer vertikalen Rührwerkskugelmühle der Fa. Netzsch (Typ PE 075) zugeführt. Die eingesetzten Mahlperlen bestanden aus Zirkoniumoxid (stabilisiert mit Yttrium) und wiesen eine Größe von 0,3 - 0,5 mm auf. Nach drei Stunden wurde die Suspension von den Mahlperlen abgetrennt und unter Rückfluss für weitere 4 h gekocht. Anschließend wurde das Lösungsmittel abdestilliert und der zurückbleibende feuchte Rückstand im Trockenschrank bei 80°C weitere 20 h getrocknet.

## Patentansprüche

1. Verfahren zur Herstellung von mit Silanen modifiziertem Nanokorund, **dadurch gekennzeichnet, dass** man Agglomerate von Nanokorund in Gegenwart eines organischen Lösungsmittels durch Mahlen desagglomeriert und gleichzeitig oder anschließend mit einem Silan behandelt.

2. Verfahren nach Anspruch 1, **dadurch gekennzeichnet, dass** man die Agglomerate durch Mahlen bei 20 bis 90°C desagglomeriert.

3. Verfahren nach Anspruch 1, **dadurch gekennzeichnet, dass** man die Desagglomeration in einem C₁-C₄-Alkohol als Lösungsmittel vornimmt.

4. Verfahren nach Anspruch 1, **dadurch gekennzeichnet, dass** das molare Verhältnis zum Nanokorund wie Silan 1:1 bis 10:1 beträgt.

## Claims

1. A process for producing nanosize α-alumina which has been modified by means of silanes, wherein agglomerates of nanosize α-alumina are deagglomerated by milling in the presence of an organic solvent and simultaneously or subsequently treated with a silane.

2. The process as claimed in claim 1, wherein the agglomerates are deagglomerated by milling at from 20 to 90°C.

3. The process as claimed in claim 1, wherein the deagglomeration is carried out in a C₁-C₄-alcohol as solvent.

4. The process as claimed in claim 1, wherein the molar ratio of nanosize α-alumina to silane is from 1:1 to 10:1.

## Revendications

1. Procédé pour la production de nanocorindon modifié avec des silanes, **caractérisé en ce qu'**on désagglomère des agglomérats de nanocorindon par broyage en présence d'un solvant organique et simultanément ou ensuite on les traite par un silane.

2. Procédé selon la revendication 1, **caractérisé en ce qu'**on désagglomère les agglomérats par broyage à une température de 20 à 90 °C.

3. Procédé selon la revendication 1, **caractérisé en ce qu'**on effectue la désagglomération dans un alcool en C₁-C₄ en tant que solvant.

4. Procédé selon la revendication 1, **caractérisé en ce que** le rapport molaire du nanocorindon au silane vaut de 1:1 à 10:1.
